# EUROPÄISCHE PATENTSCHRIFT

(11) **EP 1 475 607 B1**
(45) Veröffentlichungstag und Bekanntmachung des Hinweises auf die Patenterteilung: **04.08.2010**
(21) Anmeldenummer: 04002857.3
(22) Anmeldetag: 10.02.2004
(51) Int. Cl.: G01C 15/00, G01S 5/16

(54) **Verfahren zur Bestimmung der räumlichen Lage und Position eines Reflektorstabes in Bezug zu einem Messpunkt**
Method for determining the spatial orientation and position of a reflector rod relative to a measuring point
Procédé pour déterminer l'orientation et la position spatiale d'un jalon à réflecteur par rapport à un point de mesure

(30) Priorität: 09.05.2003 DE 10321749
(43) Veröffentlichungstag der Anmeldung: 10.11.2004
(73) Patentinhaber: Trimble Jena GmbH, 07745 Jena (DE)
(72) Erfinder: Vogel, Michael, 07629 Schleifreisen (DE)
(74) Vertreter: Geyer, Fehners & Partner

(56) Entgegenhaltungen:
- WO-A-01/09642
- WO-A-97/14015

## Beschreibung

Die Erfindung bezieht sich auf ein Verfahren zur Bestimmung der räumlichen Lage und Position eines Reflektorstabes in Bezug zu einem Aufhaltepunkt, insbesondere bei geodätischen Messungen im Gelände.

Die Bestimmung der Lage eines Bodenpunktes, beispielsweise eines Grenzsteines, bei geodätischen Vermessungen im Gelände erfolgt meistens mit Hilfe eines Reflektors, der an einem Reflektorstab in einer bestimmten Höhe über dem Bodenpunkt abgebracht ist. Dabei wird die Höhe des Reflektors über dem Bodenpunkt heute meist manuell gemessen und ist somit immer eine Fehlerquelle. Dieser Reflektorstab wird in der Praxis senkrecht auf dem Bodenpunkt aufgestellt und durch Drehung des Stabes um die senkrechte Stabachse erfolgt die Ausrichtung des Reflektors, z. B. ein Reflektor- oder Tripelprisma, zu einem Tachymeter oder einem anderen Gerät, mit dem die Messungen ausgeführt werden. Nach der Ausrichtung kann die eigentliche Messung von Horizontal- und Vertikalwinkeln und von Distanzen erfolgen. Ursachen für eine falsche Lagebestimmung des Bodenpunktes liegen unter anderen in der fehlerhaften Justierung der Dosenlibelle am Reflektorstab und im nicht fachgemäßen Aufstellen des Stabes auf dem Bodenpunkt. Zudem ist eine lotrechte Aufstellung des Stabes mit einem gewissen Zeitaufwand verbunden und bei Sichthindernissen, z. B. Büschen und Bäumen, die zwischen dem Tachymeter und dem Reflektorprisma vorhanden sind, oder bei verdeckten Punkten problematisch.

Es sind verschiedene Methoden und auch Anordnungen bekannt, mit denen die räumliche Position und Richtung eines Reflektorstabes ermittelt werden kann.

So sind an einem Reflektorstab zwei Reflektorprismen in einem bekannten Abstand angeordnet. Durch die jeweilige Messung des Abstandes vom Tachymeter zu den beiden Prismen und den zugehörigen Horizontal- und Vertikalwinkeln wird eine Raumgerade definiert, auf welcher in einem gewissen Abstand zu diesen Prismen ein Punkt (Bodenpunkt) bestimmt werden kann. Dadurch ist dieser Stab nahezu frei im Raum beweglich und kann die verschiedensten Punkte signalisieren. Ebenso ist das Berechnungsmodell überbestimmt (Anzahl der Messungen > Anzahl der Unbekannten), so daß sich die Messung kontrollieren läßt. Als nachteilig erweist sich jedoch die getrennte Messung zu den zwei Reflektoren. Diese ist zum einen zeitaufwendig, und zum anderen kann zwischen beiden Messungen nicht immer eine räumlich stabile Lage des Stabes gewährleistet werden.

Nach der US 5 512 905 erfolgt die Orientierung des Reflektorstabes mittels Neigungsmessern. Dazu sind am Stab zwei senkrecht zueinander liegende Neigungsmesser angebracht, die die entsprechende Drehungen w und K in zwei Richtungen detektieren sollen. Eine eindeutige Zuordnung der Drehwinkel gelingt dabei aber nur, wenn die Drehung ϕ um die Achse des Reflektorstabes gleich "Null" oder bekannt ist. Dieses kann jedoch nur erreicht werden, wenn der Reflektor genau auf das Tachymeter ausgerichtet ist. Des Weiteren sind die zwei Neigungen des Stabes auf den Arbeitsbereich der Sensoren der Neigungsmesser begrenzt, womit eine freie Bewegung des Stabes im Raum eingegrenzt ist.

Aus der WO 01/09642 A1 sind ein Verfahren und eine Anordnung zur Bestimmung von räumlichen Positionen und Orientierungen von Reflektoren beschrieben, wobei im Zentrum eines als Reflektor dienenden Tripelprismas eine als Lochblende wirkende abgeschnittene Ecke des Prismas vorgesehen ist. Hinter dieser befindet sich eine positionsempfindliche Sensoreinheit. Bei einer Distanzmessung wird ein Teil des vom Tachymeter ausgesendeten Lichtstrahls durch die als Lochkamera wirkende Lochblende auf die Fläche der Sensoreinheit abgebildet. Dieser abgebildete Lichtfleck kann auf der positionsempfindlichen Sensoreinheit lokalisiert und in seiner Position entsprechend bestimmt werden. Die Position des Lichtfleckes in der Bildebene der Sensoreinheit ist abhängig von den Einfallswinkeln des vom Laser-Tracker ausgesendeten Meßstrahls in Bezug auf das Reflektorprisma.

Nach diesem Verfahren werden Meßdaten bezüglich des Einfallswinkels des Lichtstrahls in den Reflektor relativ zum Objekt und/oder Meßdaten bezüglich der Reflektororientierung relativ zum Objekt erzeugt und die Position und räumliche Orientierung des Objektes anhand der Meßdaten bezüglich Richtung und Weglänge des Lichtstrahls und anhand der zusätzlichen Meßdaten berechnet. Zum Einsatz kommt dieses Verfahren vor allem bei Messungen auf bewegte Objekte mit montiertem Reflektionsprisma. Mit Hilfe einer geregelten Mechanik kann zudem der Reflektor ständig senkrecht zum Lichtstrahl des Laser-Trackers nachgeführt werden. Ebenso lassen sich anhand des Einfallswinkels und der Wellenlänge Meßwerte korrigieren.

Ist das Prisma fest am Objekt angeordnet, können zwei Drehungen des Objektes gegenüber dem Lichtstrahl identifiziert werden. Die dritte Drehung, die Drehung um die Achse des Prismas, kann so nicht detektiert werden, was ein Nachteil dieses Verfahrens ist.

Ein weiteres Verfahren zur Bestimmung der Position und Drehlage eines Objektes, unter anderen auch von Nivellierlatten und -stäbe, beschreibt die WO 99/49280 A1. Dabei wird die räumliche Orientierung eines Maßstabes oder einer Codelatte im Raum mit Hilfe einer Bildaufnahme in einem Meßkopf bestimmt. Eine gegenüber dem Aufnahmesystem in allen Richtungen geneigte Codelatte wird auf dem Sensor einer CCD-Kamera abgebildet. Aus dem Bildinhalt kann mit entsprechender Bildverarbeitung ein auf der Latte angeordneter Barcode ausgemessen und die Richtung der Latte im Bild bestimmt werden. Mit Hilfe des Barcodes und der Richtung lassen sich fünf Orientierungsparameter ermitteln. Auch hier kann eine Drehung der Latte um ihre Längsachse nicht detektiert werden. Zur Ermittlung der Drehung um die Längsachse der Latte muß ein die Latte umlaufenden zusätzlicher Code vorgesehen sein. Ein weiterer Nachteil besteht auch darin, daß die verwendete Abbildungsoptik den Barcode aufgelöst abbilden muß, so daß dieser im Bild vermessen werden kann. Bei größeren Entfernungen zwischen Abbildungsoptik und Barcode der Latte ist dieser nicht mehr aufgelöst abbildbar.

Eine weitere Anordnung zum Etablieren oder Definieren von Meßpunkten bei geodätischen Messungen ist aus der WO 90/12282 A1 bekannt. Hier ist an einem Reflektorstab neben einem Reflektorprisma auch eine Kamera mit vorgesetzter Optik angeordnet. Ein von einem Meßgerät ausgehender Meßstrahl durchdringt die Optik der Kamera und wird auf einem positionsempfindlichen Sensor einer Sensoreinheit abgebildet. Aus der Position des abgebildeten Lichtfleckes und aus den Meßdaten zweier senkrecht zueinander angeordneter Neigungsmesser wird die Neigung eines Reflektorstabes in allen drei Komponenten berechnet. Nachteilig ist hier, daß zusätzliche Neigungsmesser benötigt werden.

Der Erfindung liegt die Aufgabe zu Grunde, ein Verfahren und eine Anordnung zum Bestimmen der räumlichen Lage eines Reflektorstabes über einem Aufhalte- bzw. Bodenpunkt zu schaffen, bei welchen die Nachteile des Standes der Technik weitestgehend beseitigt sind und mit welchen mit hoher Sicherheit und Genauigkeit in einfacher Weise alle Rotationen des Reflektorstabes im Koordinatensystem der messenden Station (Basisstation) erfaßt und bei der Ermittlung der Meßwerte bei geodätischen Messungen berücksichtigt werden.

Erfindungsgemäß wird diese Aufgabe durch ein Vefahren gemäß Anspruch 1, sowie durch eine Anordnung gemäß Anspruch 3 gelöst. In den weiteren Ansprüchen sind Einzelheiten und weitere Ausführungen der Erfindung beschrieben.

So wird bei dem Verfahren zur Bestimmung der räumlichen Lage und Position eines an einem im Zielort gelegenen Aufhaltepunkt positionierten, mit einem Reflektor versehenen Reflektorstabes mit Hilfe eines von einer Lichtquelle einer Basisstation zu dem Reflektor ausgesendeten Lichtstrahls ein erstes Koordinatensystem durch den Reflektor und durch einen mit diesem in einer festen Beziehung stehenden, ersten Positionssensor definiert.

Die Richtung des Lichtstrahls zum Reflektor wird in einem zweiten Koordinatensystem mit Hilfe des Horizontal- und Vertikalwinkels der Zielachse der den Lichtstrahl aussendenden Basisstation und die Distanz von der Basisstation zum Reflektor von der Basisstation aus gemessen. Hierbei wird das zweite Koordinatensystem durch die Achsen der Basisstation definiert. Mit einem zweiten Positionssensor, der in Zielrichtung der Zielachse der Basisstation angeordnet ist und dessen räumliche Lage und Position im zweiten Koordinatensystem bekannt ist, wird die Lage und Orientierung des Reflektorstabes erfaßt.

Durch die folgenden Verfahrensschritte können nun die Koordinaten und damit die Position und Lage des Reflektorstabes und damit auch das am Aufhaltepunkt, beispielsweise einem Bodenpunkt, aufgelegte Ende des Reflektorstabes im Koordinatensystem der Basisstation bestimmt werden:
- Erzeugung von Meßdaten im ersten Koordinatensystem zur Bestimmung der räumlichen Orientierung des Reflektors und damit des Reflektorstabes zum von der Basisstation ausgesendeten Lichtstrahl mittels des ersten Positionssensors,
- Abbildung des Reflektorstabes (zusammen) mit dem Reflektor (durch eine Abbildungsoptik der Basisstation) auf den in der Basisstation angeordneten, zweiten Positionssensor,
- Bestimmung der Lage und der Position des Reflektors im zweiten Koordinatensystem aus dem (gemessenen) Horizontal- und Vertikalwinkel und der Distanz von der Basisstation zum Reflektor,
- Bestimmung von Rotationsparametern der räumlichen Orientierung des ersten Koordinatensystems gegenüber dem zweiten Koordinatensystem mittels der mit dem ersten und zweiten Positionssensor erzeugten Meßdaten,
- Bestimmung der Lage und der Position des Meßpunktes im zweiten Koordinatensystem mittels der Lage und der Position des Reflektors und der Rotationsparameter der räumlichen Orientierung des ersten Koordinatensystems gegenüber dem zweiten Koordinatensystem.

So ist es vorteilhaft, wenn die Koordinaten einer auf dem Reflektorstab in bekanntem Abstand a von dem auf den Aufhaltepunkt aufgesetzten Ende des Reflektorstabes angeordneten Markierung in Koordinaten des zweiten Koordinatensystems ermittelt werden und damit und mit dem bekannten Abstand a die Koordinaten des aufgesetzten Endes des Reflektorstabes im zweiten Koordinatensystem durch die Auswerteeinheit bestimmt werden.

Eine Anordnung zur Bestimmung der räumlichen Lage und Position eines an einem, im Zielort gelegenen Aufhalte- oder Meßpunkt positionierten, mit einem fest angeordneten Reflektor versehenen Reflektorstabes, umfaßt
- eine Basisstation, beispielsweise ein Tachymeter oder ein Videotachymeter,
   - mit einer, einen Lichtstrahl in einer Zielachse zum Zielort aussendenden Lichtquelle, wobei
   - die Lichtquelle vorzugsweise eine Laserlichtquelle ist,
   - mit einem zweiten Positionssensor zur Erzeugung von Meßwerten und Koordinaten charakterisierenden Meßdaten, wobei der Positionssensor in Zielrichtung der Zielachse der Basisstation angeordnet ist und als CCD-Matrix ausgebildet sein kann,
   - mit einer Optik zur Abbildung des Reflektorstabes zusammen mit dem Reflektor auf den zweiten Positionssensor,
   - mit Horizontal- (Hz) und Vertikalwinkel (V) messenden, ersten Meßmitteln zur Bestimmung der Richtung des Lichtstrahls, die ein zweites Koordinatensystem definieren
   - und zweite Meßmittel zur Messung der Distanz von der Basisstation zum Reflektor.

Dabei kann die Optik die Abbildungsoptik des Tachymeters oder Videotachymeters sein. Die ersten Meßmittel können dabei das Horizontal- und das Vertikalwinkelmeßsystem des Tachymeters sein. Das zweite Meßmittel ist z. B. der Distanzmesser des Tachymeters.

Am Zielort ist ein, ein erstes Koordinatensystem definierender, erster Positionssensor zur Erzeugung von die Lage und Position des Reflektors zum Zielstrahl charakterisierenden, ersten Meßdaten angeordnet, wobei dieser Positionssensor in einer definierten Position und Orientierung fest mit dem Reflektor verbunden ist. Die Anordnung umfaßt ferner eine Auswerteeinheit zur Ermittlung (und Berechnung) der räumlichen Lage und Position des am Aufhaltepunkt positionierten Reflektorstabes in Koordinaten des zweiten Koordinatensystems, wobei die Auswerteeinheit datenmäßig (elektrisch) ebenfalls mit dem ersten und dem zweiten Positionssensor sowie mit den ersten und den zweiten Meßmitteln, die zur Messung des Horizontal- (Hz) und des Vertikalwinkels (V) und der Distanz (D) vorgesehen sind, verbunden ist.

Zur Übertragung von Meßdaten und elektrischen Signalen von der Basisstation zum Reflektorstab und den dort angeordneten Baueinheiten und umgekehrt sind als Übertragungseinheit an sich bekannte Sende- und Empfangseinheiten vorgesehen.

So ist es bei der erfindungsgemäßen Anordnung vorteilhaft, wenn der Reflektor als ein Tripelprisma oder als ein Tripelspiegel ausgebildet ist.

Vorteilhaft ist ferner, daß erste und/oder der zweite Positionssensor als eine CCD-Matrix oder als CMOS- Bildsensor ausgebildet sind.

Dabei kann es vorteilhaft sein, wenn der erste Positionssensor in unmittelbarer Nähe des Reflektors in einer festen Beziehung zu diesem angeordnet ist.

Zur Bestimmung der Lage und Position des Reflektors zum den Reflektor anzielenden Lichtstrahl ist es ferner vorteilhaft, daß der erste Positionssensor hinter dem Reflektor in einer festen Beziehung zu diesem angeordnet ist.

Zur genauen Bestimmung der Koordinaten des auf dem Aufhaltepunkt aufgesetzten Endes des Reflektorstabes im zweiten Koordinatensystem ist es vorteilhaft, wenn am Reflektorstab eine Markierung in einem bekannten Abstand a vom auf den Aufhaltepunkt aufgesetzten Ende des Reflektorstabes angeordnet ist.

Zur genauen Bestimmung der Koordinaten des auf dem Aufhaltepunkt aufgesetzten Endes des Reflektorstabes im zweiten Koordinatensystem kann es auch von Vorteil sein, wenn der Reflektor am Reflektorstab in einem bekannten Abstand vom aufgesetzten Ende des Reflektorstabes angeordnet ist. In diesem Falle kann bei den Messungen auf eine Markierung auf dem Reflektorstab verzichtet werden.

Das erfindungsgemäße Verfahren und die dargestellte Anordnung ermöglichen die gleichzeitige Bestimmung der räumlichen Orientierung und der Höhe (Länge) des mit dem Reflektor versehenen Reflektorstabes. Dieser kann unter der Voraussetzung, daß der Zielstrahl auf den ersten Positionssensor abgebildet wird, im Raum frei bewegt werden. Das Verfahren ist also unabhängig von der Lotrichtung jederzeit bei geodätischen Messungen einsetzbar. Des weiteren muß der Reflektor nur grob zur Basisstation ausgerichtet werden, was den Zeitaufwand bei den Messungen verringert. Unter Zuhilfenahme einer digitalen Bildverarbeitung kann das Verfahren auch vollautomatisch oder auch interaktiv ablaufen.

Die Erfindung soll nachstehend an einem Ausführungsbeispiel näher erläutert werden.

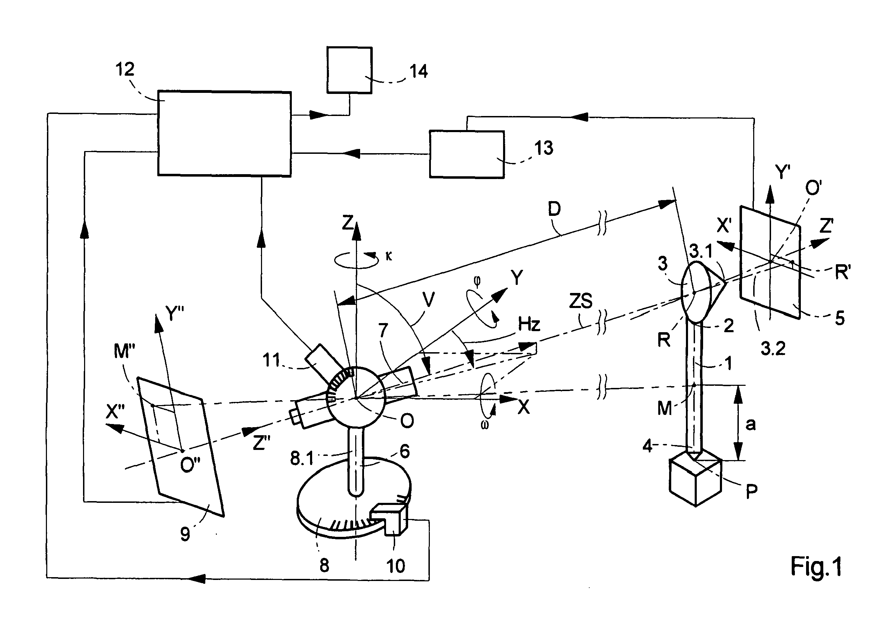

In der Zeichnung ist stark vereinfacht eine erfindungsgemäße Anordnung, bestehend aus Basisstation, Reflektorstab mit Reflektor und Auswerteeinheit, dargestellt.

Die in der Zeichnung dargestellte Anordnung zur Bestimmung der räumlichen Lage und Position eines im Zielort an einem Boden- oder Aufhaltepunkt P aufgestellten Reflektorstabes umfaßt einen Reflektorstab 1, an dessen oberen Ende 2 ein Reflektor 3 fest angeordnet ist. Mit seinem unteren Ende 4 ist der Reflektorstab 1 auf dem Aufhaltepunkt P aufgesetzt. Der Abstand des Reflektors 3 vom auf dem Aufhaltepunkt P aufliegenden unteren Ende 4 des Reflektorstabes 1 ist bei den auszuführenden geodätischen Messungen bekannt. Er kann jedoch auch verändert werden, um ihn unterschiedlichen Meßbedingungen anzupassen. Der Reflektor 3 ist, wie bei derartigen Messungen im Gelände üblich, ein Tripelprisma. Hinter dem Reflektor 3 oder in unmittelbarer Nähe ist ein erster Positionssensor 5 vorgesehen, welcher in einer festen, definierten Position und Orientierung zum Reflektor 3 angeordnet ist und erste Meßdaten liefert, die die Lage und Position des Reflektors 3 relativ zum Zielstrahl ZS kennzeichnen. In der Ebene des ersten Positionssensors 5 liegt ein erstes Koordinatensystem mit den Koordinatenachsen X' und Y'. Die zugehörige Koordinateachse Z' steht senkrecht auf dieser Ebene und verläuft durch die Spitze 3.1 des Reflektors 3. Die Spitze 3.1 oder Ecke des Reflektors 3 ist so ausgebildet, daß sie ein dünnes Lichtbündel 3.2 in Richtung auf den ersten Positionssensor 5 hindurch läßt und abbildend wie eine Lochkamera wirkt. Auf dem Reflektorstab 1 ist vorteilhaft eine Markierung M angebracht, die einen bekannten Anstand a vom unteren Ende 4 besitzt.

Die Anordnung umfaßt ferner eine Basisstation 6, die sich in einer zu messenden Distanz D vom Reflektorstab 1 befindet und von der aus die Koordinaten des Aufhaltepunktes P bestimmt werden sollen. Diese Basisstation 6, welche vorzugsweise ein Tachymeter oder einen Theodoliten mit Entfernungsmesser realisiert ist, besitzt eine, einen Lichtstrahl (Zielstrahl ZS) entlang einer Zielachse 7 zum am Zielort liegenden Reflektor 3 aussendende Lichtquelle (nicht dargestellt). Die Basisstation 6 bildet ein räumlich feststehendes, übergeordnetes, zweites Koordinatensystem mit den Koordinatenachsen X; Y und Z, wobei der Horizontalkreis 8 des die Basisstation 6 bildenden Gerätes, welcher der Bestimmung des Horizontalwinkels Hz dient, parallel zur X-Y-Ebene des zweiten Koordinatensystems ist. Durch die Stehachse 8.1 der Basisstation 6, welche sich mit der Kippachse in einem Punkt O schneidet, wird im zweiten Koordinatensystem die Z-Achse gebildet. Der Ursprung dieses zweiten Koordinatensystems ist idealer Weise der Schnittpunkt der Achsen des Gerätes der Basisstation 6. In der Basisstation 6 ist ein zweiter, flächenhafter Positionssensor 9, beispielsweise eine CCD-Matrix oder ein CMOS-Bildsensor, zur Erzeugung von zweiten Meßdaten, die Meßwerte und Koordinaten charakterisieren, vorgesehen. Die Positionssensoren 5 und 9 sind in der Zeichnung der besseren Anschaulichkeit wegen stark vergrößert dargestellt. Die Optik der Basisstation 6 und der zweite Positionssensor 9 bilden zusammen eine Kamera, beispielsweise eine CCD-Kamera. Dieser zweite Positionssensor 9 ist vorteilhaft so angeordnet, daß die Zielachse 7 stets senkrecht auf ihm steht. Im Allgemeinen bildet die Ebene des zweiten Positionssensors 9 ein weiteres Koordinatensystem mit den Koordinatenachsen X" und Y", wobei die dritte Koordinateachse Z" durch die Zielachse 7 gebildet wird, welche senkrecht auf dem zweiten Positionssensor 9 steht. In der Basisstation 6 ist ferner eine abbildende Optik (nicht dargestellt) vorhanden, mit welcher der Reflektorstab 1 zusammen mit dem Reflektor 3 auf den zweiten Positionssensor 9 abgebildet wird. Zur Bestimmung der Richtung des als Zielstrahl ZS von der Basisstation 6 ausgesendeten Lichtstrahls besitzt die Basisstation 6 erste Meßmittel im Form eines Horizontalwinkelmeßsystems 10 zur Messung des Horizontalwinkels Hz und eines Vertikalwinkelmeßsystems 11 zur Messung des Vertikalwinkels V. Zur Messung der Distanz D (Entfernung) der Basisstation 6 zum Reflektor 3 sind zweite Meßmittel in Form eines Distanzmessers (nicht dargestellt) in der Basisstation 6 vorgesehen.

Zur Übertragung von Daten vom Zielort zu einer Auswerteeinheit 12 der Basisstation 6 und umgekehrt ist eine Übertragungseinheit 13 vorgesehen. Diese Auswerteeinheit 12 ist weiterhin mit dem ersten und zweiten Positionssensor 5 und 9 und mit dem Horizontalwinkelmeßsystem 10 und dem Vertikalwinkelmeßsystem 11 sowie mit einer Anzeigeeinheit 14 zur Anzeige und Ausgabe der Meßwerte verbunden.

Gemäß dem Verfahren zur Bestimmung der räumlichen Lage und Position des an einem am Zielort gelegenen Meßpunkt (Aufhaltepunkt P) positionierten, mit dem fest angeordneten Reflektor 3 versehenen Reflektorstabes 1 mit Hilfe eines von einer Lichtquelle der Basisstation 6 zu dem Reflektor 3 ausgesendeten, als Zielstrahl ZS dienenden Lichtstrahls, definiert, wie oben angeführt, der Reflektor 3 und der mit diesem in einer festen Beziehung stehende, erste Positionssensor 5 das erste Koordinatensystem mit den Koordinatenachsen X'; Y' und Z'.

Die Richtung des Zielstrahls ZS wird in dem durch die Koordinatenachsen X; Y und Z gekennzeichneten, zweiten Koordinatensystem der Basisstation 6 durch Messung des Horizontalwinkels Hz durch das Horizontalwinkelmeßsystem 10 und des Vertikalwinkels V durch das Vertikalwinkelmeßsystems 11 ermittelt. Aus diesen Winkeln Hz und V kann die Rotationsmatrix R_{T} der Kamera in der Basisstation 6 abgeleitet werden. Die Distanz D, also die Entfernung der Basisstation 6 von dem am Reflektorstab 1 angeordneten Reflektor 3 wird durch den Entfernungsmesser der Basisstation 6 (nicht dargestellt) ermittelt. Mit diesen Werten für Hz; V und D ist jedoch noch nicht die Lage des Reflektorstabes 1 im Raum bekannt. Da Reflektorstab 1 und Reflektor 3 starr miteinander verbunden sind, kann durch Bestimmung der räumlichen Orientierung des Reflektors 3 auch die Lage des Reflektorstabes 1 in Bezug auf den von der Basisstation 6 ausgesendeten Zielstrahl ZS bestimmt werden.

Dieses geschieht nach einem von mehreren Verfahrensschritten in an sich bekannter Weise. Dabei wird das durch die wie eine Abbildungsoptik wirkende Spitze 3.1 des Reflektors 3 hindurch gehende dünne Lichtbündel 3.2 des Zielstrahls ZS auf den ersten Positionssensor 5 abgebildet. Die durch den ersten Positionssensor 5 erzeugten Meßdaten für die Lage des Auftreffpunktes R' des dünnen Lichtbündels 3.2 auf den Positionssensor 5 repräsentieren Koordinaten X' und Y' im ersten Koordinatensystem, die zur Weiterverarbeitung über die Übertragungseinheit 12 der Auswerteeinheit 14 zugeleitet werden.

Nach einem weiteren Verfahrensschritt wird der Reflektorstab 1 durch die Abbildungsoptik der Basisstation 6 auf den zweiten Positionssensor 9 abgebildet, wobei durch den Positionssensor 9 Meßdaten erzeugt werden, die die Lage des Reflektorstabes 1 und damit des Reflektors 3 in Koordinaten X" und Y" des zweiten Positionsmessers 9 repräsentieren. Auch diese Meßdaten werden an die Auswerteeinheit 14 weitergegeben.

Durch die Auswerteeinheit 14 werden dann aus den vom ersten und vom zweiten Positionssensor 5 und 9 gelieferten Meßdaten die Rotationsparameter der räumlichen Orientierung des ersten Koordinatensystems des ersten Positionssensors 5 gegenüber dem zweiten Koordinatensystem der Basisstation 6 ermittelt. Aus der Lage und Position des Reflektors 3, gemessen im zweiten Koordinatensystem der Basisstation 6 mittels der Horizontal- und Vertikalwinkel Hz und V sowie der Distanz D, und den Rotationsparametern der gegenseitigen Orientierung des ersten und zweiten Koordinatensystems werden die Koordinaten X; Y und Z des Punktes P im zweiten Koordinatensystem der Basisstation 6 berechnet, wobei mit Hilfe des Abstandes a der Markierung M des Reflektorstabes 1 von dem unteren, auf dem Aufhaltepunkt P aufliegenden Ende 4 des Reflektorstabes 1 die Reflektorhöhe bestimmt werden kann.

Ist jedoch der Abstand des Reflektors 3 zum Ende 4 des Reflektorstabs 1 bekannt, so kann diese Größe anstelle des Abstandes a in die Berechnung einbezogen werden.

Das Verfahren ermöglicht die gleichzeitige Bestimmung von Orientierung und Höhe des Reflektorstabs 1. Dieser kann dabei unter der Voraussetzung, daß der Zielstrahl ZS auf den ersten Positionssensor 5 trifft, im Raum frei bewegt werden. Das Verfahren ist also uneingeschränkt von einer senkrechten Stellung des Reflektorstabs 5 einsetzbar. Des weiteren muß der Reflektor 3 nur grob zum Gerät der Basisstation 6 ausgerichtet werden. Bei Anwendung einer digitalen Bildverarbeitung kann das Verfahren auch vollautomatisch oder auch interaktiv ausgeführt werden.

### Bezugszeichenliste

- 1: Reflektorstab
- 2: oberes Ende
- 3: Reflektor
- 3.1: Spitze
- 3.2: dünnes Lichtbündel
- 4: (unteres) aufliegendes Ende
- 5: erster Positionssensor
- 6: Basisstation
- 7: Zielachse
- 8: Horizontalkreis
- 8.1: Stehachse
- 9: zweiter Positionssensor
- 10: Horizontalwinkelmeßsystem
- 11: Vertikalwinkelmeßsystem
- 12: Auswerteeinheit
- 13: Übertragungseinheit
- 14: Anzeigeeinheit

- P: Aufhaltepunkte (Bodenpunkt)
- O: Schnittpunkt
- D: Distanz (Entfernung)
- a: Abstand
- ZS: Zielstrahl
- R': Auftreffpunkt
- M: Markierung
- M": Bild der Markierung M auf dem zweiten Positionssensor
- Hz: Horizontalwinkel
- V: Vertikalwinkel
- O': Koordinatenursprung im ersten
Koordinatensystem
- O": Koordinatenursprung im Koordinatensystem der Kamera

- ω: Rotation um die Koordinatenachse X
- ϕ: Rotation um die Koordinatenachse Y
- κ: Rotation um die Koordinatenachse Z

## Patentansprüche

1. Verfahren zur Bestimmung der räumlichen Lage und Position eines an einem im Zielort gelegenen Meß- oder Aufhaltepunkt P positionierten, mit einem Reflektor (3) versehenen Reflektorstabes (1) mit Hilfe eines von einer Lichtquelle einer Basisstation (6) zu dem Reflektor (3) ausgesendeten Licht- oder Zielstrahls ZS,
- wobei der Reflektor (3) und ein mit diesem in einer festen Beziehung stehender, erster Positionssensor (5) ein erstes Koordinatensystem definiert,
- wobei die Richtung des Lichtstrahls zum Reflektor (3) in einem zweiten Koordinatensystem mit Hilfe des Horizontal- und Vertikalwinkels (Hz; V) der Zielachse (7) der den Lichtstrahl aussendenden Basisstation (6) und die Distanz D von der Basisstation (6) zum Reflektor (3) von der Basisstation (6) aus gemessen wird,
- und wobei mit einem zweiten Positionssensor (9), der in Zielrichtung der Zielachse (7) der Basisstation (6) angeordnet ist und dessen räumliche Lage und Position zum zweiten Koordinatensystem bekannt ist, die Lage und Orientierung des Reflektorstabes (1) erfaßt wird,
**gekennzeichnet durch** folgende Verfahrensschritte:
- Erzeugung von Meßdaten im ersten Koordinatensystem zur Bestimmung der räumlichen Orientierung des Reflektors (3) und damit des Reflektorstabes (1) zum von der Basisstation (6) ausgesendeten Lichtstrahl mittels des ersten Positionssensors (5),
- Abbildung des Reflektorstabes (1) zusammen mit dem Reflektor (3) **durch** eine Abbildungsoptik der Basisstation (6) auf den in der Basisstation (6) angeordneten, zweiten Positionssensor (9),
- Bestimmung der Lage und der Position des Reflektors (3) im zweiten Koordinatensystem aus dem gemessenen Horizontal- und Vertikalwinkel (Hz; V) und der Distanz D von der Basisstation (6) zum Reflektor (3),
- Bestimmung von Rotationsparametern der räumlichen Orientierung des ersten Koordinatensystems gegenüber dem zweiten Koordinatensystem mittels der mit dem ersten und zweiten Positionssensor (5; 9) erzeugten Meßdaten,
- Bestimmung der Lage und der Position des am Meßpunkt oder Aufhaltepunkt P positionierten Reflehtorstabes (1) im zweiten Koordinatensystem mittels der Lage und der Position des Reflektors (3) im zweiten Koordinatensystem und der Rotationsparameter der räumlichen Orientierung des ersten Koordinatensystems gegenüber dem zweiten Koordinatensystem.

2. Verfahren nach Anspruch 1, **dadurch gekennzeichnet, daß** die Koordinaten einer auf dem Reflektorstab (1) in bekanntem Abstand a von dem auf den Aufhaltepunkt P aufgesetzten Ende (4) des Reflektorstabes (1) angeordneten Markierung M in Koordinaten des zweiten Koordinatensystems ermittelt werden und damit und mit dem bekannten Abstand a die Koordinaten des aufgesetzten Endes (4) des Reflektorstabes (1) im zweiten Koordinatensystem durch die Auswerteeinheit (12) bestimmt werden.

3. Anordnung zur Bestimmung der räumlichen Lage und Position eines an einem im Zielort gelegenen Meß- oder Aufhaltepunkt P positionierten, mit einem fest angeordneten Reflektor (3) versehenen Reflektorstabes (1), umfassend
- eine Basisstation (6)
- mit einer, einen Licht- oder Zielstrahl ZS in einer Zielachse (7) zu einem Zielort aussendenden Lichtquelle,
- mit einem zweiten Positionssensor (9) zur Erzeugung von Meßwerten und Koordinaten charakterisierenden zweiten Meßdaten, welcher in Zielrichtung der Zielachse (7) der Basisstation (6) angeordnet ist,
- mit einer abbildenden Optik zur Abbildung des Reflektorstabes (1) mit dem Reflektor (3) auf den zweiten Positionssensor (9),
- mit Horizontal- (Hz) und Vertikalwinkel (V) messenden, ersten Meßmitteln zur Bestimmung der Richtung des Licht- oder Zielstrahls ZS, die ein zweites Koordinatensystem definieren,
- und zweite Meßmittel zur Messung der Distanz D von der Basisstation (6) zum Reflektor (3),
- ein, ein erstes Koordinatensystem definierender, erster Positionssensor (5) zur Erzeugung von die Lage und Position des Reflektors (3) zum Zielstrahl ZS charakterisierenden, ersten Meßdaten, welcher in einer definierten Position und Orientierung fest mit dem Reflektor (3) verbunden ist,
- eine Auswerteeinheit (12) zur Ermittlung und Berechnung der räumlichen Lage und Position des am Meß- oder Aufhaltepunkt P positionierten Reflektorstabes (1) in Koordinaten des zweiten Koordinatensystems, wobei die Auswerteeinheit (12), zur Bestimmung von Rotationsparametern der räumlichen Orientierung des ersten Koordinatensystems gegenüber dem zweiten Koordinatensystem, datenmäßig mit dem ersten und dem zweiten Positionssensor (5, 9) sowie, zur Bestimmung der Lage und der Position des Reflektors (3) im zweiten Koordinatensystem, mit den ersten und den zweiten Meßmitteln, zur Messung des Horizontal-(Hz) und des Vertikalwinkels (V) und der Distanz (D), verbunden ist.

4. Anordnung nach Anspruch 3, **dadurch gekennzeichnet, daß** der Reflektor (3) als ein Tripelprisma oder als ein Tripelspiegel ausgebildet ist.

5. Anordnung nach Anspruch 3, **dadurch gekennzeichnet, daß** der erste (5) und/oder der zweite Positionssensor (9) als eine CCD-Matrix oder als CMOS-Bildsensor ausgebildet sind.

6. Anordnung nach einem der Ansprüche 3 bis 5, **dadurch gekennzeichnet, daß** der erste Positionssensor (5) in unmittelbarer Nähe des Reflektors (3) in einer festen Beziehung zu diesem angeordnet ist.

7. Anordnung nach Anspruch 6, **dadurch gekennzeichnet, daß** der erste Positionssensor (5) hinter dem Reflektor (3) in einer festen Beziehung zu diesem angeordnet ist.

8. Anordnung nach einem der Ansprüche 3 bis 7, **dadurch gekennzeichnet, daß** am Reflektorstab (1) eine Markierung M in einem bekannten Abstand a vom auf den Meß- oder Aufhaltepunkt P aufgesetzten Ende (4) des Reflektorstabes (1) angeordnet ist.

9. Anordnung nach einem der Ansprüche 3 bis 7, **dadurch gekennzeichnet, daß** der Reflektor (3) am Reflektorstab (1) in einem bekannten Abstand a vom aufgesetzten Ende (4) des Reflektorstabes (1) fest angeordnet ist.

## Claims

1. A method for determining the position and orientation in space of a reflector rod (1) provided with a reflector (3) and positioned at a survey or ground point P situated at the sighting target, by means of a light beam or sighting ray ZS sent by a light source of a base station (6) to the reflector (3),
- in which the reflector (3) and, being in a fixed spatial relation to it, a first position sensor (5) define a first coordinate system,
- and in which the direction of the light beam to the reflector (3) is measured in a second coordinate system by means of the horizontal and the vertical angle (Hz; V) of the sighting axis (7) of the base station (6) that sends the light beam, and the distance D between the base station (6) and the reflector (3) is measured at the base station (6),
- and in which the position and orientation of the reflector rod (1) are acquired by a second position sensor (9) that is arranged in the sighting direction of the sighting axis (7) of the base station (6) and whose position and orientation in space relative to the second coordinate system are known,
**characterized by** the following method steps:
- Generation of measurement data in the first coordinate system for determining the spatial orientation of the reflector (3) and, thus, of the reflector rod (1) relative to the light beam sent by the base station (6), by means of the first position sensor (5),
- imaging the reflector rod (1) together with the reflector (3) by means of an optical imaging system of the base station (6) onto the second position sensor (9) arranged in the base station (6),
- determining the position and orientation of the reflector (3) in the second coordinate system from the measured horizontal and vertical angles (Hz; V) and the distance D between the base station (6) and the reflector (3),
- determining rotation parameters of the spatial orientation of the first coordinate system relative to the second coordinate system by means of the measurement data generated by the first and the second positioning sensor (5; 9),
- determining the position and orientation of the reflector rod (1) positioned at the survey or ground point, in the second coordinate system, by means of the position and orientation of the reflector (3) in the second coordinate system and the rotation parameters of the spatial orientation of the first coordinate system relative to the second one.

2. A method as claimed in Claim 1, **characterized in that** the coordinates of a mark M arranged on the reflector rod (1) at a known distance a from the end (4) of reflector rod (1) which rests on the ground point P are determined in terms of coordinates of the second coordinate systems, and **in that** these and the known distance a are used by the data analysis unit (12) to determine the coordinates of the resting end (4) of the reflector rod (1) in the second coordinate system.

3. An arrangement for determining the position and orientation in space of a reflector rod (1) provided with a reflector (3) in a fixed arrangement and positioned at a survey or ground point P situated at the sighting target, comprising
- a base station (6)
- with a light source that sends a light beam or sighting ray ZS to a target along a sighting axis (7),
- with a second position sensor (9) for generating measurement data as well as second measurement data that characterize coordinates, this position sensor being arranged in the sighting direction of the sighting axis (7) of the base station (6),
- with an optical imaging system for imaging the reflector rod (1) with the reflector (3) onto the second positioning sensor (9),
- with first measuring means that measure horizontal (Hz) and vertical (V) angles to determine the direction of the light beam or sighting ray ZS, which define a second coordinate system,
- and with second measuring means for measuring the distance D between the base station (6) and the reflector (3),
- a first position sensor (5) defining a first coordinate system, for generating first measurement data that characterize the position and orientation of the reflector (3) relative to the sighting ray ZS, this position sensor being rigidly connected to the reflector (3) in a defined position and orientation,
- a data analysis unit (12) for determining and computing the position and orientation in space of the reflector rod (1) positioned at the survey or ground point P, in terms of coordinates of the second coordinate system, this data analysis unit (12) being connected, as far as the data are concerned, with the first and the second position sensor (5; 9) so that it can determine rotation parameters of the spatial orientation of the first coordinate system relative to the second one, and with the first and second measuring means for measuring the horizontal (Hz) and vertical (V) angles and the distance (D) so that it can determine the position and orientation of the reflector (3) in the second coordinate system.

4. An arrangement as claimed in Claim 3, **characterized in that** the reflector (3) is configured as a triple prism or triple mirror.

5. An arrangement as claimed in Claim 3, **characterized in that** the first (5) and/or the second position sensor (9) are configured as a CCD matrices of CMOS image sensors.

6. An arrangement as claimed in any one of Claims 3 through 5, **characterized in that** the first position sensor (5) is arranged in the immediate vicinity of the reflector (3) and in a fixed spatial relation to it.

7. An arrangement as claimed in Claim 6, **characterized in that** the first position sensor (5) is arranged behind the reflector (3) and in a fixed relation to it.

8. An arrangement as claimed in any one of Claims 3 through 7, **characterized in that** a mark M is arranged on the reflector rod (1) at a known distance a from the end (4) of the reflector rod (1) that rests on the survey or ground point P.

9. An arrangement as claimed in any one of Claims 3 through 7, **characterized in that** the reflector (3) is rigidly arranged on the reflector rod (1) at a known distance a from the resting end (4) of the reflector rod (1).

## Revendications

1. Procédé destiné à déterminer la situation et la position spatiales d'un jalon à réflecteur (1), muni d'un réflecteur (3), positionné sur un point de mesure ou point de référence (P) situé dans le lieu de visée, au moyen d'un rayon de lumière ou rayon de visée (ZS), émis par une source lumineuse d'une station de base (6) vers le réflecteur (3),
- ledit réflecteur (3) et un premier capteur de position (5), en relation fixe avec celui-ci, définissant un premier système de coordonnées,
- la direction du rayon de lumière vers le réflecteur (3) étant mesurée dans un deuxième système de coordonnées au moyen d'un angle horizontal et vertical (Hz ; V) de l'axe de visée (7) de la station de base (6) émettant le rayon de lumière, et la distance (D) depuis la station de base (6) vers le réflecteur (3) étant mesurée à partir de la station de base (6),
- et la situation et l'orientation du jalon à réflecteur (1) étant détectées avec un deuxième capteur de position (9), qui est disposé dans la direction de visée de l'axe de visée (7) de la station de base (6) et dont la situation et la position spatiales par rapport au deuxième système de coordonnées sont connues,
**caractérisé par** les étapes suivantes :
- génération de données de mesure dans le premier système de coordonnées pour déterminer, au moyen du premier capteur de position (5), l'orientation spatiale du réflecteur (3) et donc du jalon à réflecteur (1) par rapport au rayon de lumière émis par la station de base (6),
- reproduction du jalon à réflecteur (1) conjointement avec le réflecteur (3) par un élément optique de reproduction de la station de base (6) sur le deuxième capteur de position (9), disposé dans la station de base (6),
- détermination de la situation et de la position du réflecteur (3) dans le deuxième système de coordonnées à partir de l'angle horizontal et vertical (Hz ; V) mesuré et à partir de la distance (D) depuis la station de base (6) vers le réflecteur (3),
- détermination des paramètres de rotation de l'orientation spatiale du premier système de coordonnées par rapport au deuxième système de coordonnées au moyen des données de mesure générées avec le premier et le deuxième capteur de position (5 ; 9),
- détermination de la situation et de la position du jalon à réflecteur (1), positionné sur le point de mesure ou point de référence (P), dans le deuxième système de coordonnées au moyen de la situation et de la position du réflecteur (3) dans le deuxième système de coordonnées et des paramètres de rotation de l'orientation spatiale du premier système de coordonnées par rapport au deuxième système de coordonnées.

2. Procédé selon la revendication 1, **caractérisé en ce que** les coordonnées d'un marquage (M), disposé sur le jalon à réflecteur (1) à une distance (a) connue par rapport à l'extrémité (4) du jalon à réflecteur (1), posée sur le point de référence (P), sont déterminées en coordonnées du deuxième système de coordonnées, et avec celles-ci et au moyen de la distance (a) connue, les coordonnées de l'extrémité (4) posée du jalon à réflecteur (1) sont déterminées dans le deuxième système de coordonnées par l'unité d'analyse (12).

3. Système destiné à déterminer la situation et la position spatiales d'un jalon à réflecteur (1), muni d'un réflecteur (3), positionné sur un point de mesure ou point de référence (P) situé dans le lieu de visée, au moyen d'un jalon à réflecteur (1) muni d'un réflecteur (3) fixe, comportant :
- une station de base (6)
- avec une source lumineuse émettant un rayon lumineux ou rayon de visée (ZS) dans un axe de visée (7) vers un lieu de visée,
- avec un deuxième capteur de position (9) destiné à générer des valeurs de mesure et des deuxièmes valeurs de mesure caractérisant des coordonnées, lequel est disposé dans la direction de visée de l'axe de visée (7) de la station de base (6),
- avec un élément optique de reproduction pour reproduire l'image du jalon à réflecteur (1) avec le réflecteur (3) sur le deuxième capteur de position (9),
- avec des premiers moyens de mesure, mesurant l'angle horizontal (Hz) et l'angle vertical (V) et destinés à déterminer la direction du rayon lumineux ou du rayon de visée (ZS), qui définissent un deuxième système de coordonnées,
- et des deuxièmes moyens de mesure de la distance (D) depuis la station de base (6) vers le réflecteur (3),
- un premier capteur de position (5), qui définit un premier système de coordonnées et est destiné à générer des premières données de mesure caractérisant la situation et la position du réflecteur (3) par rapport au rayon de visée (ZS), et qui est relié de manière fixe au réflecteur (3) dans une position et une orientation définies,
- une unité d'analyse (12) destinée à déterminer et calculer la situation et la position spatiales du jalon à réflecteur (1), positionné sur le point de mesure ou point de référence (P), dans les coordonnées du deuxième système de coordonnées, sachant que ladite unité d'analyse (12), pour déterminer les paramètres de rotation de l'orientation spatiale du premier système de coordonnées par rapport au deuxième système de coordonnées, est reliée sur le plan des données au premier et au deuxième capteur de position (5, 9), et, pour déterminer la situation et la position du réflecteur (3) dans le deuxième système de coordonnées, est reliée aux premiers et deuxièmes moyens de mesure, destinés à mesurer l'angle horizontal (Hz) et l'angle vertical (V) et la distance (D).

4. Système selon la revendication 3, **caractérisé en ce que** le réflecteur (3) est réalisé sous la forme d'un prisme triple ou sous la forme d'un miroir triple.

5. Système selon la revendication 3, **caractérisé en ce que** le premier (5) et/ou le deuxième capteur de position (9) sont réalisés sous la forme d'une matrice CCD ou sous la forme d'un capteur d'image CMOS.

6. Système selon l'une quelconque des revendications 3 à 5, **caractérisé en ce que** le premier capteur de position (5) est disposé à proximité immédiate du réflecteur (3) dans une relation fixe avec celui-ci.

7. Système selon la revendication 6, **caractérisé en ce que** le premier capteur de position (5) est disposé en aval du réflecteur (3) dans une relation fixe avec celui-ci.

8. Système selon l'une quelconque des revendications 3 à 7, **caractérisé en ce que** sur le jalon à réflecteur (1) est réalisé un marquage (M) à une distance (a) connue par rapport à l'extrémité (4) du jalon à réflecteur (1), posée sur le point de mesure ou point de référence (P).

9. Système selon l'une quelconque des revendications 3 à 7, **caractérisé en ce que** le réflecteur (3) est disposé de manière fixe sur le jalon à réflecteur (1) à une distance (a) connue par rapport à l'extrémité (4) posée du jalon à réflecteur (1).
